# EUROPÄISCHE PATENTSCHRIFT

(11) **EP 2 444 173 B1**
(45) Veröffentlichungstag und Bekanntmachung des Hinweises auf die Patenterteilung: **27.11.2013**
(21) Anmeldenummer: 10188135.7
(22) Anmeldetag: 20.10.2010
(51) Int. Cl.: B21D 37/14, B21D 43/00

(54) **Maschinelle Anordnung zum Bearbeiten von Blechen sowie Verfahren zum Werkzeugwechsel an einer derartigen maschinellen Anordnung**
Mechanical assembly for processing metal sheets and method for changing tools on such a mechanical assembly
Agencement mécanique pour le traitement de tôles ainsi que procédé de changement d'outil pour un tel agencement mécanique

(43) Veröffentlichungstag der Anmeldung: 25.04.2012
(73) Patentinhaber: TRUMPF Sachsen GmbH, 01904 Neukirch (DE)
(72) Erfinder: Busch, Marcus, 01324 Dresden (DE)
(74) Vertreter: Kohler Schmid Möbus

(56) Entgegenhaltungen:
- EP-A1- 2 198 991
- US-A- 5 224 915
- US-A- 5 669 866

## Beschreibung

Die Erfindung betrifft eine maschinelle Anordnung zum Bearbeiten von Blechen,
- mit einer Werkzeugmaschine mit einer Bearbeitungsstation, an welcher Bleche mittels eines Bearbeitungswerkzeuges bearbeitbar sind,
- mit einer Werkzeugaufnahme für ein Bearbeitungswerkzeug,
- mit einer Transfereinrichtung, mittels derer ein Bearbeitungswerkzeug der Werkzeugaufnahme zuführbar oder von dieser abführbar ist sowie
- mit einer Werkzeugwechselvorrichtung, die aufgrund einer gesteuerten Positionierbewegung in einer Werkzeugwechselposition anordenbar ist, wobei nach der Anordnung der Werkzeugwechselvorrichtung in der Werkzeugwechselposition ein Bearbeitungswerkzeug mittels der Werkzeugwechselvorrichtung zwischen der Werkzeugaufnahme und der Transfereinrichtung austauschbar ist.

Die Erfindung betrifft des Weiteren ein Verfahren zum Werkzeugwechsel an einer maschinellen Anordnung der vorstehenden Art, wobei
- mittels der Transfereinrichtung ein Bearbeitungswerkzeug der Werkzeugaufnahme zugeführt oder von dieser abgeführt wird,
- die Werkzeugwechselvorrichtung aufgrund einer gesteuerten Positionierbewegung in einer Werkzeugwechselposition angeordnet wird und
- nach der Anordnung der Werkzeugwechselvorrichtung in der Werkzeugwechselposition ein Bearbeitungswerkzeug mittels der Werkzeugwechselvorrichtung zwischen der Werkzeugaufnahme und der Transfereinrichtung ausgetauscht wird.

Gattungsgemäßer Stand der Technik ist offenbart in EP 2 198 991 A1. Im Falle des Standes der Technik übernimmt eine Be- und Entladeeinheit einer maschinellen Anordnung für die Blechbearbeitung eine Doppelfunktion. Zum einen dient die Be- und Entladeeinheit dazu, eine Blechbearbeitungsmaschine der maschinellen Anordnung mit zu bearbeitenden Blechen zu beschicken. Zum andern wird die Be- und Entladeeinheit zum Transfer von Bearbeitungswerkzeugen zwischen einem Linearmagazin der Bearbeitungsmaschine und einem an einem Gestell der Be- und Entladeeinheit vorgesehenen Werkzeuglager genutzt. Zur Durchführung eines Werkzeugwechsels ist die Be- und Entladeeinheit mit einer Werkzeugwechselvorrichtung in Form eines zangenartigen Greifers versehen. Durch entsprechendes Verfahren bewegt die Be- und Entladeeinheit den Greifer gegenüber einer Werkzeugaufnahme des maschinenseitigen Linearmagazins oder gegenüber einer Werkzeugaufnahme des Lagers in eine Werkzeugwechselposition, in welcher ein Bearbeitungswerkzeug von dem Greifer an die betreffende Werkzeugaufnahme übergeben oder von der betreffenden Werkzeugaufnahme übernommen werden kann. Ein funktionssicherer Werkzeugwechsel setzt eine exakte gegenseitige Positionierung des Greifers einerseits und der betreffenden Werkzeugaufnahme andererseits voraus. Diese Werkzeugwechselposition des Greifers ist in der numerischen Steuerung der maschinellen Anordnung hinterlegt. Auf der Grundlage der hinterlegten Daten wird der Greifer durch die Be- und Entladeeinheit mit einer gesteuerten Positionierbewegung in die Werkzeugwechselposition überführt. Bei der Definition der Werkzeugwechselposition wird steuerungstechnisch sowohl für den Greifer als auch für die zu bedienende Werkzeugaufnahme eine Sollposition unterstellt.

Aufgabe der vorliegenden Erfindung ist es, den Stand der Technik im Hinblick auf seine Funktionssicherheit zu verbessern.

Erfindungsgemäß gelöst wird diese Aufgabe durch die maschinelle Anordnung gemäß Patentanspruch 1 sowie durch das Verfahren gemäß Patentanspruch 9.

Im Falle der Erfindung wird vor einem Werkzeugwechsel mittels einer Erfassungseinrichtung eine Positionserfassung durchgeführt. Dabei wird die tatsächliche Position der Transfereinrichtung und/oder die tatsächliche Position der zu bedienenden Werkzeugaufnahme ermittelt. In Abhängigkeit von der ermittelten Ist-Position wird die zur Überführung der Werkzeugwechselvorrichtung in die Werkzeugwechselposition dienende Positionierbewegung gesteuert. Erfindungsgemäß werden demnach bei der Positionierung der Werkzeugwechselvorrichtung gegenüber der Transfereinrichtung und/oder gegenüber der Werkzeugaufnahme die an der maschinellen Anordnung zum Zeitpunkt des Werkzeugwechsels tatsächlich bestehenden Verhältnisse berücksichtigt. Auf diese Art und Weise kann ein Werkzeugwechsel beispielsweise auch dann funktionssicher durchgeführt werden, wenn die tatsächliche Position der Transfereinrichtung und/oder der Werkzeugaufnahme Änderungen unterworfen ist. Derartige Positionsänderungen können sich beispielsweise aufgrund von Verformungen an der Transfereinrichtung und/oder aufgrund von Verformungen der mit der Werkzeugaufnahme versehenen Tragstruktur ergeben. Von besonderer Bedeutung ist die erfindungsgemäße Positionserfassung in Fällen, in denen die Werkzeugwechselvorrichtung und die zu bedienende Werkzeugaufnahme mechanisch voneinander getrennt an unterschiedlichen Tragstrukturen angebracht sind. Aufgrund der mechanischen Trennung ist eine unvorhergesehene, in der Maschinensteuerung nicht berücksichtigte Positionsänderung an einer der Tragstrukturen nicht zwangsweise mit einer entsprechenden Positionsänderung an der anderen Tragstruktur verbunden. In der betrieblichen Praxis können derartige einseitige Positionsänderungen beispielsweise an luftgefedert aufgestellten Werkzeugmaschinen auftreten, deren Position bzw. Ausrichtung sich infolge der Luftfederung bei wechselnden Lastverhältnissen nennenswert verändert. Als zu bedienende Werkzeugaufnahme kommen lager- und magazinseitige Werkzeugaufnahmen, aber auch Werkzeugaufnahmen unmittelbar an der Bearbeitungsstation der Werkzeugmaschine in Frage.

Besondere Ausführungsarten der maschinellen Anordnung nach Patentanspruch 1 sowie des Verfahrens nach Patentanspruch 9 ergeben sich aus den abhängigen Patentansprüchen 2 bis 8 und 10 bis 12.

Gemäß Patentanspruch 2 ist in bevorzugter Ausgestaltung der Erfindung als mittels der Werkzeugwechselvorrichtung zu bedienende Werkzeugaufnahme eine werkzeugmaschinenseitige Werkzeugaufnahme vorgesehen. Insbesondere kann die werkzeugmaschinenseitige Werkzeugaufnahme Teil eines linearen Werkzeugmagazins der Werkzeugmaschine sein. Bekanntermaßen umfassen derartige Linearmagazine mehrere Werkzeugaufnahmen, die längs einer Tragschiene angeordnet sind. Um die an der Tragschiene vorgesehenen Werkzeugaufnahmen für den Werkzeugwechsel gegenüber der Transfereinrichtung positionieren zu können, ist die Tragschiene längsbeweglich. Je nach Position in ihrer Bewegungsrichtung kragt die Tragschiene mehr oder weniger weit vor. In Abhängigkeit von der vorkragenden Länge biegt sich die Tragschiene unter Schwerkraftwirkung bzw. neigt sich die mit der Tragschiene versehene Werkzeugmaschine unterschiedlich stark. Infolgedessen variiert die Position der an der Tragschiene angeordneten Werkzeugaufnahmen im Koordinatensystem der Steuerung der maschinellen Anordnung. Erfindungsgemäß können die auftretenden Positionsänderungen erfasst und bei der Überführung der Werkzeugwechselvorrichtung in die Werkzeugwechselposition durch entsprechende Steuerung der von der Werkzeugwechselvorrichtung ausgeführten Positionierbewegung kompensiert werden.

Die erfindungsgemäße Anordnung kann ein Lager für Bearbeitungswerkzeuge aufweisen. In diesem Fall besteht die Möglichkeit, dass die Transfereinrichtung der erfindungsgemäßen Anordnung Bearbeitungswerkzeuge zwischen dem Lager und einer werkzeugmaschinenseitigen Werkzeugaufnahme transferiert. Die Werkzeugwechselvorrichtung wird dabei auf die vorstehend beschriebene Art und Weise in die Werkzeugwechselposition überführt.

Ergänzend oder alternativ ist erfindungsgemäß vorgesehen, dass als Werkzeugaufnahme, die mittels der Werkzeugwechselvorrichtung bedient wird, eine Werkzeugaufnahme des Lagers für Bearbeitungswerkzeuge vorgesehen ist (Patentanspruch 3).

Der Einfachheit halber ist in bevorzugter Ausgestaltung der Erfindung die Werkzeugwechselvorrichtung zur Ausführung der gesteuerten Positionierbewegung mit der Transfereinrichtung oder mit der Werkzeugaufnahme bewegungsverbunden (Patentansprüche 4, 11). Aufgrund dieses Erfindungsmerkmals kann für die Positionierbewegung der Werkzeugwechselvorrichtung der Antrieb der Transfereinrichtung bzw. der Antrieb der Werkzeugaufnahme genutzt werden. Ein separater Positionierantrieb zur Überführung der Werkzeugwechselvorrichtung in die Werkzeugwechselposition erübrigt sich in diesem Fall.

In weiterer bevorzugter Ausgestaltung der Erfindung ist die Bewegungsverbindung von Werkzeugwechselvorrichtung und Transfereinrichtung oder die Bewegungsverbindung von Werkzeugwechselvorrichtung und Werkzeugaufnahme lösbar, sobald die Werkzeugwechselvorrichtung die Werkzeugwechselposition einnimmt (Patentansprüche 5, 12). Eine derartige Ausgestaltung der Erfindung trägt in besonderem Maße dem Umstand Rechnung, dass die Werkzeugwechselposition der Werkzeugwechselvorrichtung beispielsweise aufgrund äußerer Einflüsse variieren kann. Ist die Werkzeugwechselvorrichtung etwa mit der Transfereinrichtung versehen und dadurch mit dieser bewegungsverbunden, so kann die Transfereinrichtung beim Transfer von Bearbeitungswerkzeugen werkzeugmaschinenseitig ungeachtet etwaiger unvorhergesehener Positionsänderungen stets in dieselbe Position bewegt werden. Es muss lediglich sichergestellt sein, dass die Werkzeugwechselvorrichtung in der Werkzeugwechselposition ankommt, ehe die Transfereinrichtung ihre feste Endposition erreicht. Auf dem Weg in ihre Endposition setzt die Transfereinrichtung die Werkzeugwechselvorrichtung unter Lösen der zwischen den beiden Einrichtungen bestehenden Bewegungsverbindung quasi in der Werkzeugwechselposition ab.

Für die technische Ausführung der Erfassungseinrichtung zur Durchführung der Positionserfassung von Transfereinrichtung und/oder Werkzeugaufnahme bieten sich mehrere Möglichkeiten. Erfindungsgemäß bevorzugt werden die in den Patentansprüchen 6 und 7 beschriebenen Bauarten der Erfassungseinrichtung. Gemäß Patentanspruch 6 wird zur Positionserfassung und somit zur Positionierung der Werkzeugwechselvorrichtung in der Werkzeugwechselposition ein Anschlag verwendet, der mit einem zugeordneten Gegenanschlag zusammenwirkt. Diese konstruktive Lösung zeichnet sich durch ihre Robustheit und durch ihre Funktionssicherheit auch unter rauen Umgebungsbedingungen aus. Die ausweislich Patentanspruch 7 vorgesehene Schaltanordnung ermöglicht demgegenüber bei entsprechender Ausgestaltung auch eine berührungslose Positionserfassung.

Eine besonders hohe Funktionssicherheit ist im Falle der Erfindungsbauart nach Patentanspruch 8 gewährleistet. In diesem Fall wird eine mehrachsige Positionserfassung und auf dieser Grundlage eine mehrachsige Steuerung der Positionierbewegung der Werkzeugwechselvorrichtung vorgenommen.

In bevorzugter Ausgestaltung des erfindungsgemäßen Verfahrens wird gemäß Patentanspruch 10 eine Positionserfassung vor jedem einzelnen Werkzeugwechsel durchgeführt.

Nachstehend wird die Erfindung anhand beispielhafter schematischer Darstellungen näher erläutert. Es zeigen:
Figur 1 eine maschinelle Anordnung für die Blechbearbeitung mit einer Werkzeugmaschine sowie mit einer Automatisierungseinrichtung hierfür,
Figur 2 einen vergrößerten Ausschnitt von Figur 1,
Figuren 3 bis 11 den Ablauf eines Werkzeugwechsels an der Werkzeugmaschine gemäß Figur 1 und
Figuren 12 bis 14 den Ablauf eines Werkzeugwechsels an einem Werkzeuglager der Automatisierungseinrichtung gemäß Figur 1.

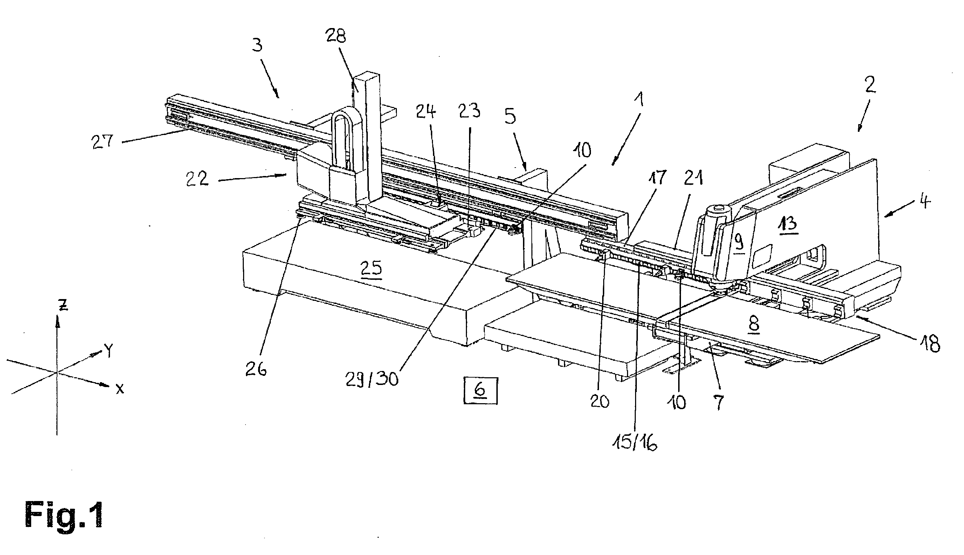

Gemäß Figur 1 umfasst eine maschinelle Anordnung 1 zum Bearbeiten von nicht gezeigten Blechen eine Werkzeugmaschine in Form einer Stanzmaschine 2 sowie eine hierfür vorgesehene Automatisierungseinrichtung 3. Die Stanzmaschine 2 und die Automatisierungseinrichtung 3 sind unmittelbar nebeneinander aufgestellt aber gleichwohl mechanisch voneinander getrennt. Dementsprechend besteht zwischen einem C-förmigen Maschinengestell 4 der Stanzmaschine 2 und einer Tragstruktur 5 der Automatisierungseinrichtung 3 keine mechanische Verbindung. Der Stanzmaschine 2 und der Automatisierungseinrichtung 3 gemeinsam ist eine in Figur 1 schematisch angedeutete numerische Maschinensteuerung 6, die alle wesentlichen Funktionen der Stanzmaschine 2 und der Automatisierungseinrichtung 3 steuert.

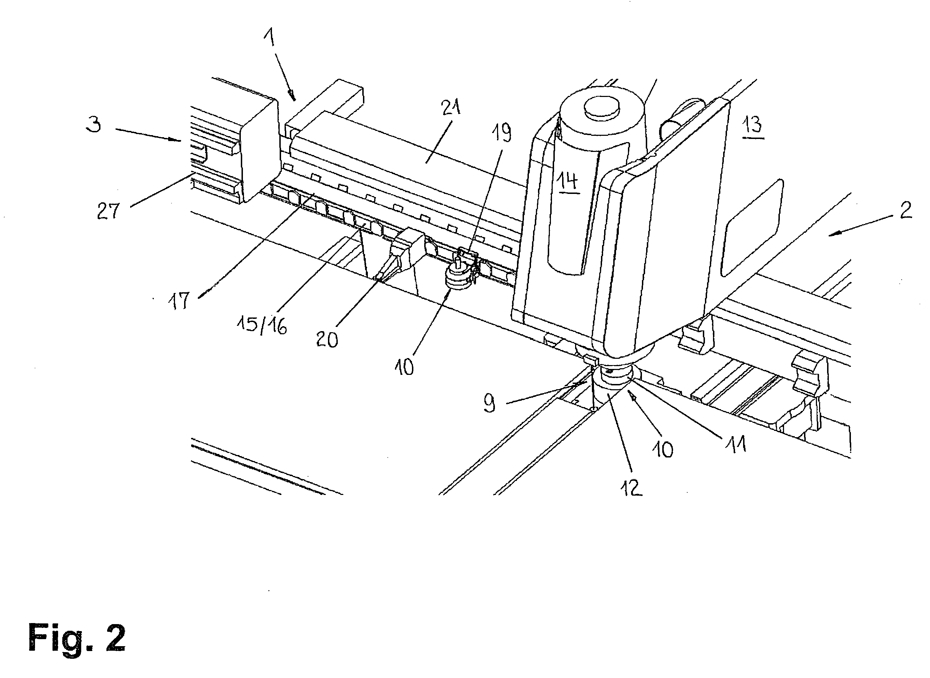

In gewohnter Weise ist auf einem unteren Gestellschenkel 7 des Maschinengestells 4 der Stanzmaschine 2 eine Werkstückauflage 8 gelagert. An einer als Stanzstation 9 ausgeführten Bearbeitungsstation der Stanzmaschine 2 werden die betreffenden Bleche bearbeitet. Wie insbesondere aus Figur 2 hervorgeht, ist an der Werkzeugaufnahme der Stanzstation 9 zu diesem Zweck als Bearbeitungswerkzeug ein Stanzwerkzeug 10 montiert. Das Stanzwerkzeug 10 ist herkömmlicher Bauart und umfasst dementsprechend im Wesentlichen einen Stanzstempel 11 an dem freien Ende eines oberen Gestellschenkels 13 der Stanzmaschine 2 sowie eine Stanzmatrize 12 an dem unteren Gestellschenkel 7 der Stanzmaschine 2. Ein numerisch gesteuerter Stanzantrieb 14 bewegt den Stanzstempel 11 in gewohnter Weise relativ zu der Stanzmatrize 12.

Je nach Bearbeitungsaufgabe werden an der Stanzstation 9 der Stanzmaschine 2 unterschiedliche Stanzwerkzeuge 10 eingewechselt. Eine Mehrzahl von Stanzwerkzeugen 10 wird an maschinenseitigen Werkzeugaufnahmen 15 als Ersatz für das an der Stanzstation 9 im Einsatz befindliche Stanzwerkzeug 10 vorgehalten. In den Figuren 1 und 2 ist der Übersichtlichkeit halber lediglich ein einzelnes Ersatzwerkzeug dargestellt.

Die maschinenseitigen Werkzeugaufnahmen 15 bilden ein Linearmagazin 16 für Stanzwerkzeuge 10. Sie sind an einer Querschiene 17 einer herkömmlichen, im Rachenraum des Maschinengestells 4 untergebrachten Koordinatenführung 18 befestigt. Die Stanzwerkzeuge 10 sind in die maschinenseitigen Werkzeugaufnahmen 15 wie gewohnt über Werkzeughalter 19, sogenannte Werkzeugkassetten, eingeschoben. Nahe den maschinenseitigen Werkzeugaufnahmen 15 lagert die Querschiene 17 Spannpratzen 20 für zu bearbeitende Bleche.

Wie üblich wird die Querschiene 17 zum Werkzeugwechsel an der Stanzstation 9 und auch zur Bewegung von zu bearbeitenden Blechen gegenüber der Stanzstation 9 in einer horizontalen Ebene bewegt. Diese horizontale Ebene wird durch eine X-Achse sowie eine Y-Achse aufgespannt. Bei ihrer Bewegung in Richtung der X-Achse ist die Querschiene 17 an einer Querführung 21 der Koordinatenführung 18 geführt. Die Querführung 21 ist ihrerseits gemeinsam mit der Querschiene 17 in Richtung der Y-Achse verfahrbar.

Die Beweglichkeit der Querschiene 17 wird an der maschinellen Anordnung 1 außerdem dazu genutzt, das Linearmagazin 16 mit den an der Stanzstation 9 benötigten Stanzwerkzeugen 10 zu bestücken, Ist die Querschiene 17 gegenüber der Querführung 21 in Richtung der X-Achse in die Position gemäß den Figuren 1 und 2 verfahren, so können an der zu der Automatisierungseinrichtung 3 weisenden Seite des Maschinengestells 4 der Stanzmaschine 2 Stanzwerkzeuge 10 an die maschinenseitigen Werkzeugaufnahmen 15 der Querschiene 17 übergeben oder von den maschinenseitigen Werkzeugaufnahmen 15 übernommen werden.

Der Werkzeugwechsel an den maschinenseitigen Werkzeugaufnahmen 15 der Querschiene 17 wird automatisiert mittels der Automatisierungseinrichtung 3, im Einzelnen mittels einer Bedieneinheit 22 der Automatisierungseinrichtung 3, durchgeführt.

Die Bedieneinheit 22 der Automatisierungseinrichtung 3 umfasst einen Saugerrahmen 23 als Transfereinrichtung sowie eine an den Saugerrahmen 23 angekoppelte Werkzeugwechseleinheit 24.

Mittels des Saugerrahmens 23 werden zu bearbeitende Bleche von einem Lagerplatz 25 zu der Stanzmaschine 2 transportiert. Zu diesem Zweck ist der Saugerrahmen 23 an seiner Unterseite mit Vakuumsaugern 26 herkömmlicher Bauart zur Fixierung der zu transportierenden Bleche versehen.

Die Bedieneinheit 22 mit dem Saugerrahmen 23 und der daran angekoppelten Werkzeugwechseleinheit 24 ist motorisch angetrieben und numerisch gesteuert in Richtung der X-Achse sowie in Richtung einer Z-Achse verfahrbar. Geführt werden die Bewegungen der Bedieneinheit 22 mittels einer horizontalen Führungsschiene 27 und einer vertikalen Führungsschiene 28. Unterhalb der horizontalen Führungsschiene 27 ist an der Tragstruktur 5 der Automatisierungseinrichtung 3 ein Lager 29 für Stanzwerkzeuge 10 vorgesehen. Das Lager 29 weist in horizontaler Richtung nebeneinander angeordnete lagerseitige Werkzeugaufnahmen 30 auf. Auch an den lagerseitigen Werkzeugaufnahmen 30 werden die betreffenden Stanzwerkzeuge 10 mit Hilfe von Werkzeughaltern 19 angebracht.

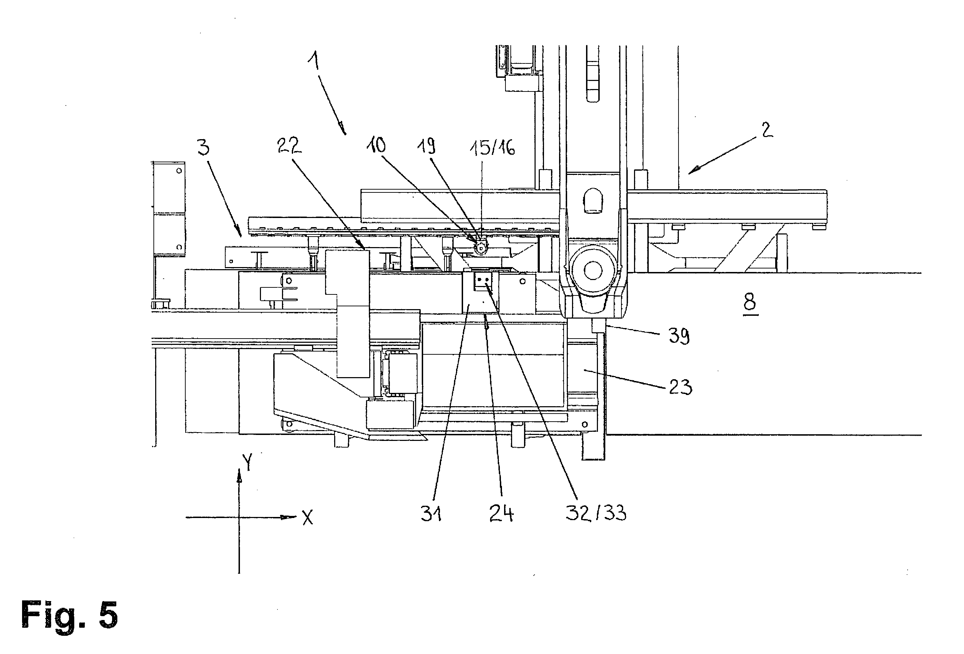

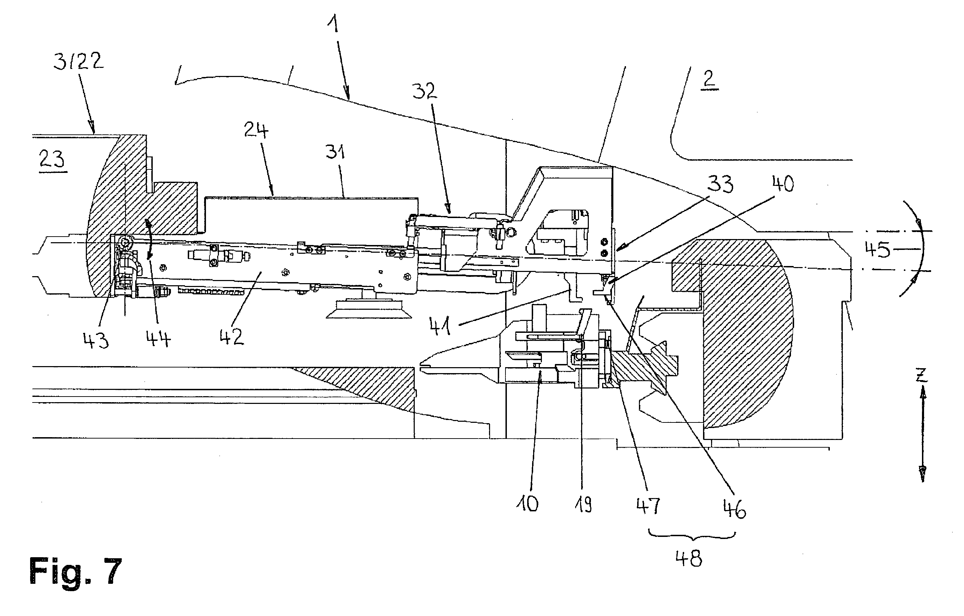

Die Werkzeugwechseleinheit 24 umfasst ein Gehäuse 31 sowie einen Greifer 32 (Figur 5). Der Greifer 32 weist als Werkzeugwechselvorrichtung eine Zange 33 auf (Figur 7).

Soll ausgehend von den Verhältnissen gemäß den Figuren 1 und 2 das an der Querschiene 17 der Stanzmaschine 2 gehaltene Stanzwerkzeug 10 ausgewechselt werden, so ist die Zange 33 der Werkzeugwechseleinheit 24 mit einer numerisch gesteuerten Positionierbewegung in eine Werkzeugwechselposition zu überführen. In dem dargestellten Beispielsfall wird eine Positionierbewegung der Zange 33 in sämtlichen Achsrichtungen des Raumes ausgeführt.

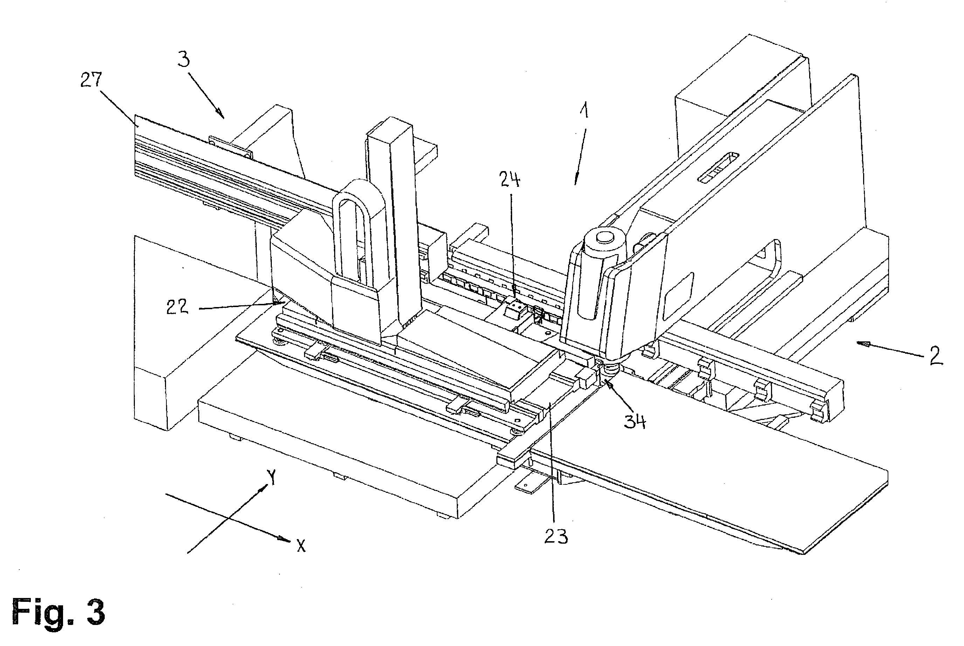

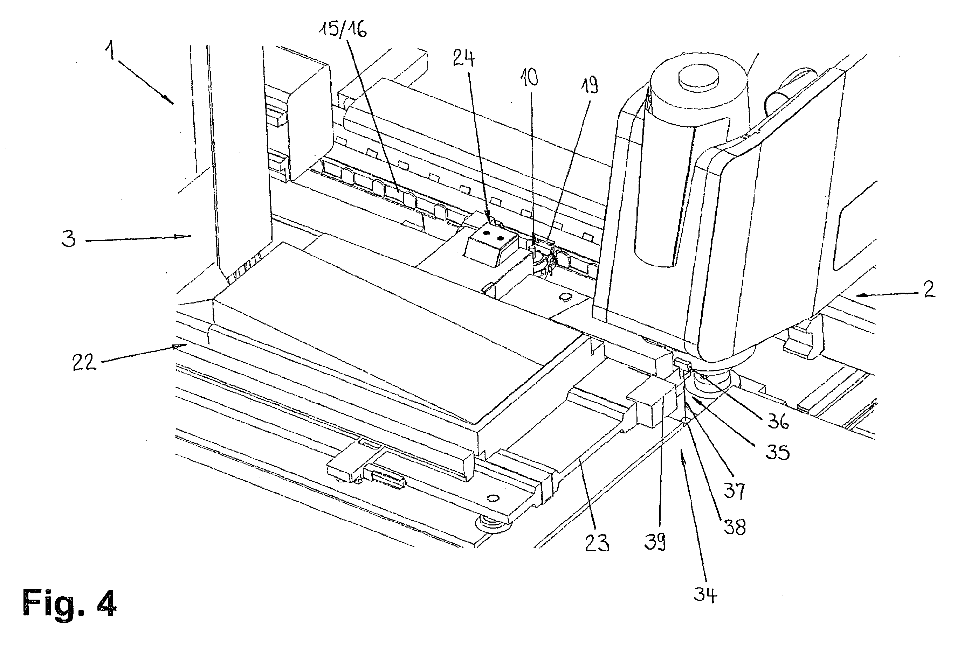

In Richtung der X-Achse verfährt die Bedieneinheit 22 mit der Werkzeugwechseleinheit 24 und der Zange 33 längs der horizontalen Führungsschiene 27 der Automatisierungseinrichtung 3 aus der Position gemäß den Figuren 1 und 2 in die Position gemäß den Figuren 3 und 4. Die Endposition der Bedieneinheit 22 in Richtung der X-Achse und somit auch die von der in der Werkzeugwechselposition angeordneten Zange 33 in dieser Achsrichtung eingenommene Position wird mit Hilfe einer ersten Erfassungseinrichtung 34 definiert, die im Detail in Figur 4 dargestellt ist.

Die erste Erfassungseinrichtung 34 ist als Schaltanordnung ausgebildet und umfasst als erstes Schaltelement eine Laserlichtschranke 35 mit einer Laserlichtquelle 36, einem von dieser ausgehenden Laserlichtstrahl 37 sowie einem Laserlichtempfänger 38. Die Laserlichtschranke 35 ist ebenso wie die Querschiene 17 des Linearmagazins 16 und die daran angebrachten maschinenseitigen Werkzeugaufnahmen 15 mit dem Maschinengestell 4 der Stanzmaschine 2 verbunden. Kommt es zu einer Verlagerung des Maschinengestells 4 und einer damit zwangsweise verbundenen Verlagerung der maschinenseitigen Werkzeugaufnahmen 15 in X-Richtung, so vollzieht die Laserlichtschranke 35 diese Verlagerung mit. Infolgedessen gibt die Position der Laserlichtschranke 35 und dabei insbesondere die Position des Laserlichtstrahls 37 die momentane Position des Maschinengestells 4 und der daran gelagerten maschinenseitigen Werkzeugaufnahmen 15 in Richtung der X-Achse wieder.

Als zweites Schaltelement der ersten Erfassungseinrichtung 34 wirkt mit der Laserlichtschranke 35 eine bei der Bewegung der Bedieneinheit 22 in Richtung der X-Achse zu der Stanzmaschine 2 hin voreilende Kante 39 des Saugerrahmens 23 zusammen. Die voreilende Kante 39 des Saugerrahmens 23 ist bezüglich der auf dem Saugerrahmen 23 aufsitzenden Werkzeugwechselvorrichtung, also bezüglich der Zange 33, definiert angeordnet. Infolgedessen gibt die momentane Position der voreilenden Kante 39 des Saugerrahmens 23 indirekt auch die momentane Position der Zange 33 in Richtung der X-Achse wieder.

Sobald die voreilende Kante 39 des Saugerrahmens 23 im Laufe der von der Bedieneinheit 22 in Richtung der X-Achse ausgeführten Bewegung die stanzmaschinenseitige Laserlichtschranke 35 erreicht und deren Laserlichtstrahl 37 unterbricht, generiert die erste Erfassungseinrichtung 34 ein Schaltsignal für die numerische Maschinensteuerung 6. Aufgrund dieses Schaltsignals setzt die numerische Maschinensteuerung 6 den Positionierantrieb, mittels dessen die Bedieneinheit 22 in Richtung der X-Achse bewegt wird, still.

In der Draufsicht auf die Werkstückauflage 8 zeigt Figur 5 die Verhältnisse an der Stanzmaschine 2 zu demjenigen Zeitpunkt, zu welchem der Positionierantrieb der Bedieneinheit 22 und somit auch der Werkzeugwechselvorrichtung bzw. der Zange 33 in Richtung der X-Achse stillgesetzt worden ist und zu welchem folglich die Zange 33 in Richtung der X-Achse ihre der Werkzeugwechselposition zugeordnete Position einnimmt.

Die Zange 33 liegt der maschinenseitigen Werkzeugaufnahme 15 mit dem daraus zu entnehmenden Stanzwerkzeug 10 in Richtung der Y-Achse mit Abstand gegenüber. Der Greifer 32 mit der Zange 33 ist in das Gehäuse 31 der Werkzeugwechseleinheit 24 zurückgezogen. Die Zange 33 der Werkzeugwechseleinheit 24 liegt in Richtung der Z-Achse oberhalb des Stanzwerkzeugs 10 und auch oberhalb des an der betreffenden maschinenseitigen Werkzeugaufnahme 15 gelagerten und das Stanzwerkzeug 10 aufnehmenden Werkzeughalters 19.

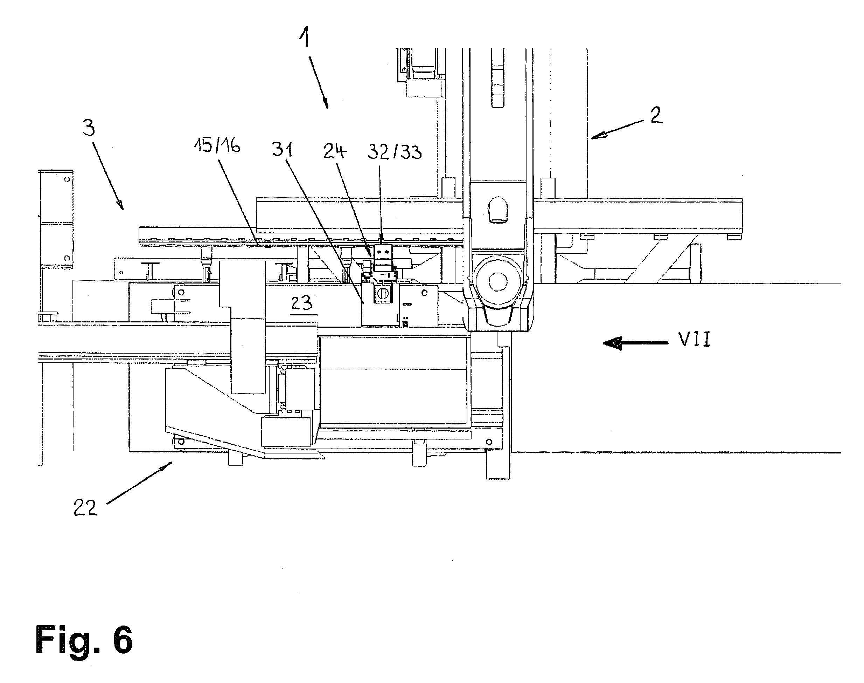

Ausgehend von dem in Figur 5 veranschaulichten Funktionszustand der Werkzeugwechseleinheit 24 fährt der Greifer 32 mit der Zange 33 aus dem Gehäuse 31 in Richtung der Y-Achse in die Position gemäß Figur 6 aus. Der Betrag dieser Ausfahrbewegung des Greifers 32 ist als fester Wert in der Maschinensteuerung 6 hinterlegt. Da in Richtung der Y-Achse nicht mit nennenswerten gegenseitigen Verlagerungen des Saugerrahmens 23 mit der Werkzeugwechseleinheit 24 einerseits und der maschinenseitigen Werkzeugaufnahmen 15 andererseits gerechnet werden muss, wird in dem gezeigten Fall von einer Positionserfassung in Richtung der Y-Achse und von einer in dieser Richtung variablen Steuerung der Positionierbewegung der Zange 33 abgesehen. In der Seitenansicht in Richtung des Pfeils VII von Figur 6 sind die Verhältnisse, die sich nach der Verfahrbewegung der Zange 33 in Richtung der Y-Achse ergeben, in Figur 7 dargestellt, Ausweislich Figur 7 umfasst die Zange 33 der Werkzeugwechseleinheit 24 einander in Richtung der Y-Achse gegenüberliegende Zangenschenkel 40, 41. Die Zangenschenkel 40, 41 sind motorisch, im gezeigten Beispielsfall pneumatisch, angetrieben und numerisch gesteuert in Richtung der Y-Achse aufeinander zu und voneinander weg bewegbar. Eine Zangenführung 42, welche die Zangenschenkel 40, 41 bei deren Bewegung in Richtung der Y-Achse führt, ist um eine in Richtung der X-Achse verlaufende Schwenkachse 43 in Richtung eines Doppelpfeils 44 begrenzt schwenkbar an dem Saugerrahmen 23 gelagert. In Figur 7 ist die Zangenführung 42 gemeinsam mit der Zange 33 um die Schwenkachse 43 gegenüber der Horizontalen um einen Auslenkwinkel 45 nach unten ausgelenkt. Mit Abstand von der Schwenkachse 43 stützt sich die Zangenführung 42 unter der Wirkung einer vorgespannten Feder nach unten hin an dem Saugerrahmen 23 ab.

Der Zangenschenkel 40 bildet mit seiner in Richtung der Z-Achse nach unten weisenden Stirnfläche einen Anschlag 46 aus. Maschinenseitig ist dem Anschlag 46 des Zangenschenkels 40 ein Gegenanschlag 47 zugeordnet, der seinerseits an dem Werkzeughalter 19 des zu wechselnden Stanzwerkzeuges 10 vorgesehen ist.

Gemeinsam bilden der Anschlag 46 an dem Zangenschenkel 40 und der Gegenanschlag 47 an dem Werkzeughalter 19 eine zweite Erfassungseinrichtung 48. Der Anschlag 46 ist bezüglich der Zange 33 in Richtung der Z-Achse definiert angeordnet. Dementsprechend gibt die momentane Position des Anschlages 46 in Richtung der Z-Achse die von der Zange 33 in dieser Richtung eingenommene Ist-Position wieder. Entsprechend ist der Gegenanschlag 47 über den Werkzeughalter 19 der maschinenseitigen Werkzeugaufnahme 15 des Stanzwerkzeuges 10 zugeordnet. Die Position des Gegenanschlages 47 in Richtung der Z-Achse steht folglich für die Position, welche die maschinenseitige Werkzeugaufnahme 15 in dieser Richtung momentan einnimmt.

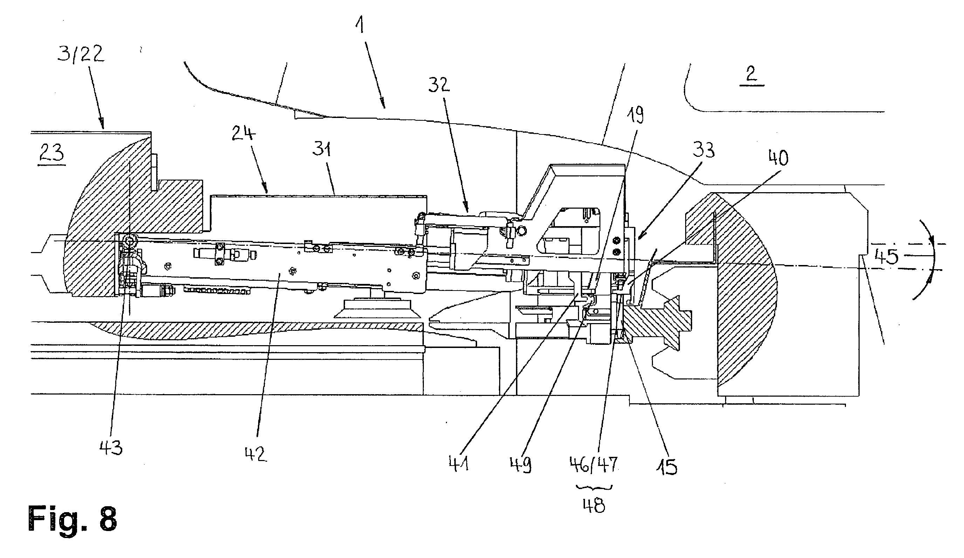

Ausgehend von dem Betriebszustand gemäß Figur 7 wird die Bedieneinheit 22 und mit dieser der Greifer 32 mit der Zange 33 und der Zangenführung 42 in Richtung der Z-Achse abgesenkt. Die an dem Saugerrahmen 23 gelagerte Zange 33 vollzieht die Absenkbewegung des Saugerrahmens 23 so lange mit, bis der Anschlag 46 an dem Zangenschenkel 40 auf den Gegenanschlag 47 an dem Werkzeughalter 19 auftrifft (Figur 8).

Kommt der Anschlag 46 des Zangenschenkels 40 an dem Gegenanschlag 47 des Werkzeughalters 19 zur Anlage, so nimmt die Zange 33 in Richtung der Z-Achse die Werkzeugwechselposition ein, also diejenige Position, von der ausgehend die Zange 33 einen Werkzeugwechsel durchführen kann.

Hat die Zange 33 in Richtung der Z-Achse die Werkzeugwechselposition erreicht, ist die Zange 33 also an dem Werkzeughalter 19 und über diesen an der maschinenseitigen Werkzeugaufnahme 15 in Richtung der Z-Achse abgestützt, so behält die Zange 33 ungeachtet einer fortgesetzten Absenkbewegung des Saugerrahmens 23 ihre Position in Richtung der Z-Achse bei. Es erfolgt also eine bewegungsmäßige Entkopplung von Saugerrahmen 23 und Zange 33. Diese bewegungsmäßige Entkopplung wird durch die schwenkbare Lagerung der Zangenführung 42 und somit auch der Zange 33 an dem Saugerrahmen 23 ermöglicht.

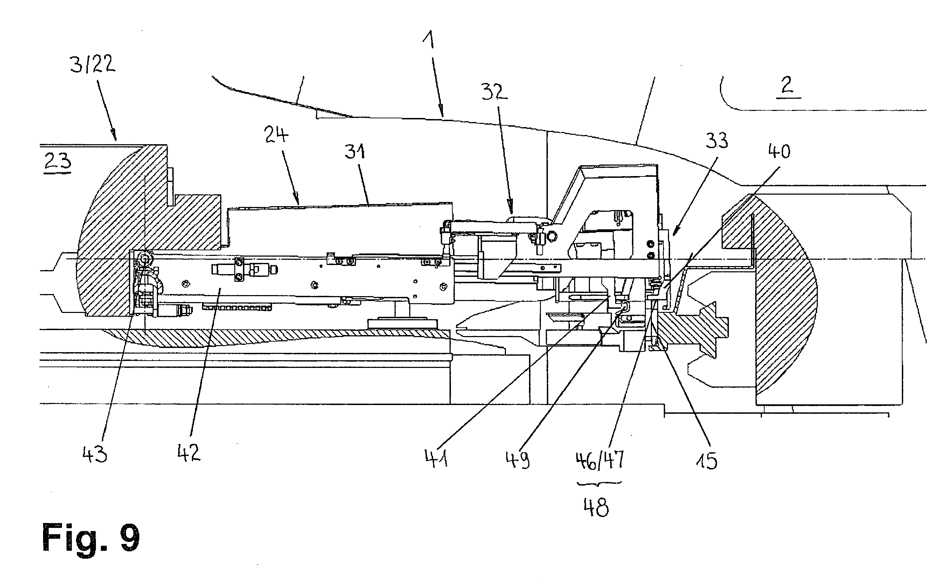

Aufgrund der schwenkbaren Lagerung an dem Saugerrahmen 23 gleicht die Zange 33 bei der Absenkbewegung in Richtung der Z-Achse etwa in Folge von Verlagerungen an dem Maschinengestell 4 auftretende Schwankungen der Höhenlage der maschinenseitigen Werkzeugaufnahme 15 in Richtung der Z-Achse selbsttätig aus. Die numerische Maschinensteuerung 6 kann die Absenkbewegung des Saugerrahmens 23 daher in eine stets gleichbleibende Endposition in Richtung der Z-Achse veranlassen. Die in der numerischen Maschinensteuerung 6 hinterlegte Endposition des Saugerrahmens 23 in Absenkrichtung muss lediglich derart festgelegt werden, dass die Zange 33 mit Sicherheit auf dem Werkzeughalter 19 aufsetzt, ehe der Saugerrahmen 23 seine Endlage in Richtung der Absenkbewegung erreicht. Befindet sich der Saugerrahmen 23 in seiner unteren Endlage, so verläuft in dem dargestellten Beispielsfall die Zangenführung 42 horizontal (Figur 9).

Die in Richtung der Z-Achse in die Werkzeugwechselposition überführte Zange 33 ist in Figur 9 dargestellt. In Richtung der X-Achse und auch in Richtung der Y-Achse ist die Zange 33 bereits zuvor in der oben erläuterten Weise in die Werkzeugwechselposition bewegt worden.

Alles in allem nimmt die Zange 33 jetzt gegenüber der zu bedienenden maschinenseitigen Werkzeugaufnahme 15 in den Achsrichtungen des Raumes diejenige Position ein, bei welcher der Werkzeugwechsel durchgeführt werden kann.

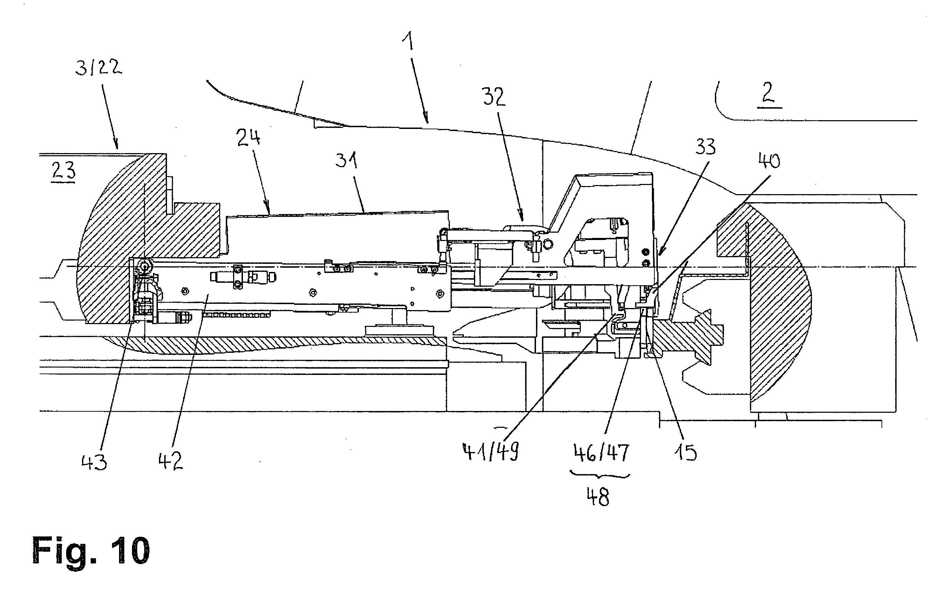

Die Zange 33 wird daher durch gegenläufiges Bewegen der Zangenschenkel 40, 41 in Richtung der Y-Achse geschlossen. Dabei läuft der Zangenschenkel 41 in eine zugeordnete Aufnahme 49 an dem Werkzeughalter 19 ein. Der Zangenschenkel 40 gleitet über den Gegenanschlag 47 an dem Werkzeughalter 19, bleibt dabei aber nach wie vor mit dem Gegenanschlag 47 in Kontakt (Figur 10).

Wird nun eine Arretierung üblicher Bauart des Werkzeughalters 19 an der maschinenseitigen Werkzeugaufnahme 15 gelöst, so kann durch Aufwärtsbewegung der Zange 33 in Richtung der Z-Achse das Stanzwerkzeug 10 aus der maschinenseitigen Werkzeugaufnahme 15 entnommen werden. Zu diesem Zweck wird der Saugerrahmen 23 in Richtung der Z-Achse angehoben.

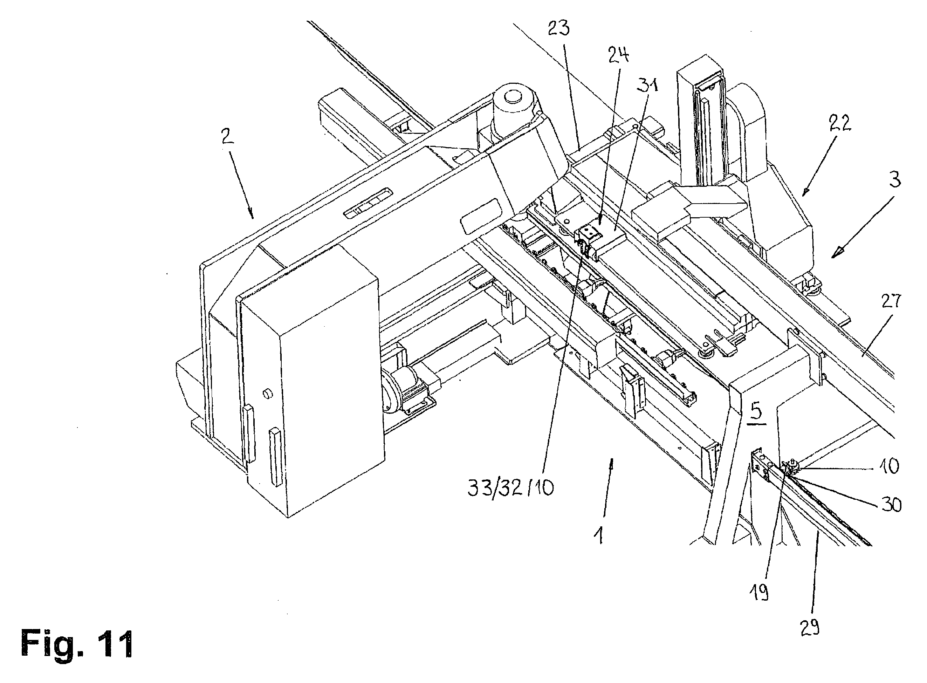

Zunächst ist der Saugerrahmen 23 bei seiner Aufwärtsbewegung noch von der Zange 33 bewegungsmäßig entkoppelt. Die Aufwärtsbewegung des Saugerrahmens 23 hat in dieser Bewegungsphase eine durch die zuvor gestauchte Feder unterstützte Schwenkbewegung der Zange 33 und der Zangenführung 42 relativ zu dem Saugerrahmen 23 zur Folge. Während dieser Schwenkbewegung behält die Zange 33 ihre Werkzeugwechselposition auch in Richtung der Z-Achse unverändert bei. Wird im Laufe der Hubbewegung des Saugerrahmens 23 die Schwenkwinkelbegrenzung der Zangenführung 42 wirksam, so verläuft diese gegenüber der Horizontalen wieder unter dem Auslenkwinkel 45. Bei fortgesetzter Hubbewegung des Saugerrahmens 23 nimmt dieser die Zange 33 sowie das an dieser gehaltene Stanzwerkzeug 10 in Richtung der Z-Achse mit. Am Ende der Hubbewegung des Saugerrahmens 23 ergibt sich wieder der in Figur 6 gezeigte Betriebszustand. Hiervon ausgehend wird die Zange 33 mit dem daran fixierten Stanzwerkzeug 10 in Richtung der Y-Achse in das Gehäuse 31 der Werkzeugwechseleinheit 24 zurückgezogen (Figur 11).

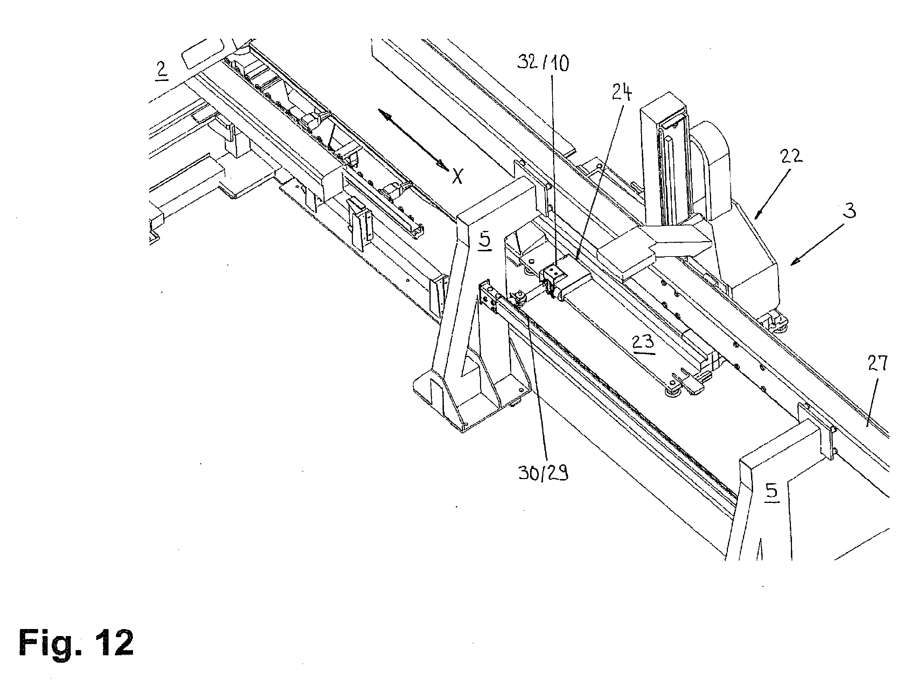

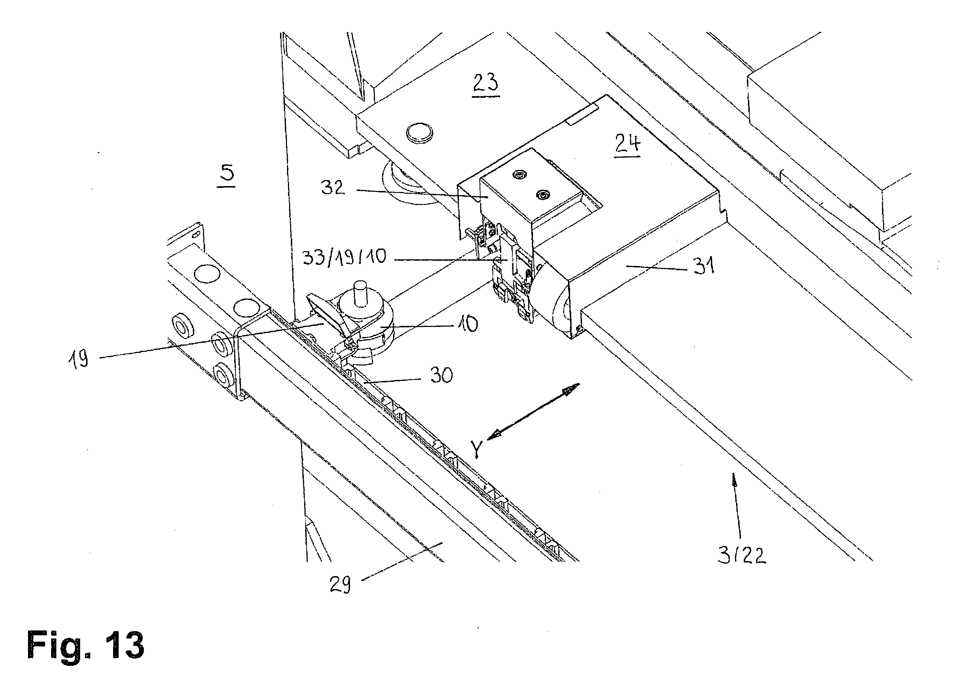

Anschließend verfährt der Saugerrahmen 23 mit dem Stanzwerkzeug 10 längs der horizontalen Führungsschiene 27 der Automatisierungseinrichtung 3 zu dem Lager 29. Die Verfahrbewegung des Saugerrahmens 23 in Richtung der X-Achse endet, sobald das an dem Saugerrahmen 23 gehaltene Stanzwerkzeug 10 mit dem Werkzeughalter 19 auf Höhe einer freien lagerseitigen Werkzeugaufnahme 30 angelangt ist (Figuren 12, 13). Diese Endposition des Saugerrahmens 23 bzw. der daran vorgesehenen Zange 33 ist in der numerischen Maschinensteuerung 6 hinterlegt. Von einer gesonderten Positionserfassung der freien lagerseitigen Werkzeugaufnahme 30 in Richtung der X-Achse wird abgesehen, nachdem die Führungen des Saugerrahmens 23 und der Zange 33 an der Tragstruktur 5 der Automatisierungseinrichtung 3 mechanisch mit der zu bedienenden lagerseitigen Werkzeugaufnahme 30 verbunden sind und sich etwaige Verformungen oder Positionsänderungen der Tragstruktur 5 daher gleichermaßen auf die Position der Zange 33 an dem Saugerrahmen 23 und auf die Position der lagerseitigen Werkzeugaufnahmen 30 auswirken.

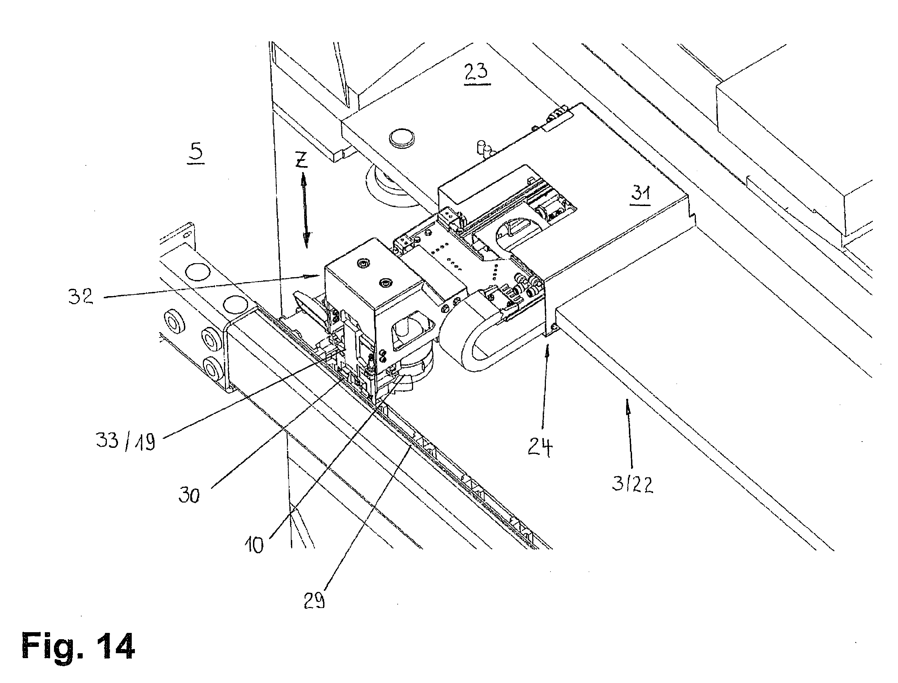

Ausgehend von dem Betriebszustand gemäß Figur 13 fährt der Greifer 32 mit der Zange 33 in Y-Richtung aus dem Gehäuse 31 so weit aus, bis der Werkzeughalter 19 mit dem Stanzwerkzeug 10 oberhalb der zu bedienenden lagerseitigen Werkzeugaufnahme 30 angeordnet ist (Figur 14). Anschließend wird durch eine Absenkbewegung des Saugerrahmens 23 in Richtung der Z-Achse der Werkzeughalter 19 mit dem Stanzwerkzeug 10 an die freie lagerseitige Werkzeugaufnahme 30 des Lagers 29 übergeben. Nach der Übergabe wird der Werkzeughalter 19 an der lagerseitigen Werkzeugaufnahme 30 arretiert.

Auch bei der Übergabe des Stanzwerkzeuges 10 an die lagerseitige Werkzeugaufnahme 30 ist die Schwenkbeweglichkeit der Zange 33 gegenüber dem Saugerrahmen 23 von Vorteil. Unerwartete Veränderungen der Position der zu bedienenden lagerseitigen Werkzeugaufnahme 30 können kompensiert werden und die untere Endposition des Saugerrahmens 23 in Richtung der Z-Achse lässt sich steuerungstechnisch mit einer gewissen Toleranz definieren. Es muss lediglich gewährleistet sein, dass der Werkzeughalter 19 bzw. das Stanzwerkzeug 10 in Richtung der Z-Achse in die Sollposition an der lagerseitigen Werkzeugaufnahme 30 gelangt. Aufgrund der schwenkbaren Lagerung der Zange 33 an dem Saugerrahmen 23 ist es unschädlich, wenn der Saugerrahmen 23 weiter als hierfür unbedingt erforderlich in Richtung der Z-Achse abgesenkt wird.

Entsprechend wirkt sich die Schwenkbeweglichkeit der Zange 33 in Fällen aus, in denen Stanzwerkzeuge 10 von dem Saugerrahmen 23 an maschinenseitige Werkzeugaufnahmen 15 zu übergeben sind. In Richtung der X-Achse wird auch diese Werkzeugübergabe mit Hilfe der ersten Erfassungseinrichtung 34 gesteuert.

## Patentansprüche

1. Maschinelle Anordnung zum Bearbeiten von Blechen,
• mit einer Werkzeugmaschine (2) mit einer Bearbeitungsstation (9), an welcher Bleche mittels eines Bearbeitungswerkzeuges (10) bearbeitbar sind,
• mit einer Werkzeugaufnahme (15, 30) für ein Bearbeitungswerkzeug (10),
• mit einer Transfereinrichtung (23), mittels derer ein Bearbeitungswerkzeug (10) der Werkzeugaufnahme (15, 30) zuführbar oder von dieser abführbar ist sowie
• mit einer Werkzeugwechselvorrichtung (33), die aufgrund einer gesteuerten Positionierbewegung in einer Werkzeugwechselposition anordenbar ist, wobei ein Bearbeitungswerkzeug (10) mittels der in der Werkzeugwechselposition angeordneten Werkzeugwechselvorrichtung (33) zwischen der Werkzeugaufnahme (15, 30) und der Transfereinrichtung (23) austauschbar ist,
**dadurch gekennzeichnet, dass**
eine Erfassungseinrichtung (34, 48) vorgesehen ist, mit einem der Werkzeugwechselvorrichtung (33) zugeordneten Erfassungselement, mittels dessen vor einem Werkzeugwechsel durch Positionserfassung die Position der Transfereinrichtung (23) und/oder die Position der Werkzeugaufnahme (15, 30) erfassbar ist und dass die Positionierbewegung aufgrund der Positionserfassung steuerbar und dadurch die Werkzeugwechselvorrichtung (33) in der Werkzeugwechselposition anordenbar ist.

2. Maschinelle Anordnung nach Anspruch 1, **dadurch gekennzeichnet, dass** als Werkzeugaufnahme (15) eine maschinenseitige Werkzeugaufnahme vorgesehen ist.

3. Maschinelle Anordnung nach einem der vorhergehenden Ansprüche, **dadurch gekennzeichnet, dass** die maschinelle Anordnung ein Lager (29) für Bearbeitungswerkzeuge (10) aufweist und dass als Werkzeugaufnahme (30) eine lagerseitige Werkzeugaufnahme vorgesehen ist

4. Maschinelle Anordnung nach einem der vorhergehenden Ansprüche, **dadurch gekennzeichnet, dass** die Werkzeugwechselvorrichtung (33) zur Ausführung der gesteuerten Positionierbewegung mit der Transfereinrichtung (23) oder mit der Werkzeugaufnahme (15, 30) bewegungsverbunden ist.

5. Maschinelle Anordnung nach einem der vorhergehenden Ansprüche, **dadurch gekennzeichnet, dass** die Bewegungsverbindung der Werkzeugwechselvorrichtung (33) und der Transfereinrichtung (23) oder die Bewegungsverbindung der Werkzeugwechselvorrichtung (33) und der Werkzeugaufnahme (15, 30) lösbar ist, sobald die Werkzeugwechselvorrichtung (33) in der Werkzeugwechselposition angeordnet ist

6. Maschinelle Anordnung nach einem der vorhergehenden Ansprüche, **dadurch gekennzeichnet, dass** als Erfassungselement ein bezüglich der Werkzeugwechselvorrichtung (33) definiert angeordneter Anschlag (46) vorgesehen ist, welcher an einem bezüglich der Transfereinrichtung (23) definiert angeordneten Gegenanschlag und/oder an einem bezüglich der Werkzeugaufnahme (15, 30) definiert angeordneten Gegenanschlag (47) anlegbar ist und dass bei an dem Gegenanschlag (47) angelegtem Anschlag (46) die Werkzeugwechselvorrichtung (33) gegenüber der Werkzeugwechselposition definiert, vorzugsweise in der Werkzeugwechselposition, angeordnet ist.

7. Maschinelle Anordnung nach einem der vorhergehenden Ansprüche, **dadurch gekennzeichnet, dass** die Erfassungseinrichtung (34) als Schaltanordnung zum Schalten eines Positionierantriebes der Werkzeugwechselvorrichtung (33) ausgebildet ist, mit zwei Schaltelementen (35, 39) als Erfassungselemente, wobei das eine Schaltelement (39) der Werkzeugwechselvorrichtung (33) zugeordnet und gegenüber dieser definiert angeordnet ist, wobei das andere Schaltelement (35) der Transfereinrichtung (23) oder der Werkzeugaufnahme (15, 30) zugeordnet und gegenüber dieser definiert angeordnet ist und wobei der Postionierantrieb der Werkzeugwechselvorrichtung (33) mittels der Schaltanordnung stillsetzbar ist, wenn die Werkzeugwechselvorrichtung (33) gegenüber der Werkzeugwechselposition definiert, vorzugsweise in der Werkzeugwechselposition, angeordnet ist.

8. Maschinelle Anordnung nach einem der vorhergehenden Ansprüche, **dadurch gekennzeichnet, dass** mehrere Erfassungseinrichtungen (34, 48) vorgesehen und unterschiedlichen Achsrichtungen des Raumes zugeordnet sind und dass mittels der Erfassungseinrichtungen (34, 48) vor einem Werkzeugwechsel durch Positionserfassung die Position der Transfereinrichtung (33) und/oder die Position der Werkzeugaufnahme (15, 30) in den unterschiedlichen Achsrichtungen erfassbar ist und dass die Positionierbewegung aufgrund der Positionserfassung in den unterschiedlichen Achsrichtungen steuerbar und dadurch die Werkzeugwechselvorrichtung (33) in der Werkzeugwechselposition anordenbar ist

9. Verfahren zum Werkzeugwechsel an einer maschinellen Anordnung (1) zum Bearbeiten von Blechen, wobei die maschinelle Anordnung (1)
• eine Werkzeugmaschine (2) mit einer Bearbeitungsstation (9), an welcher Bleche mittels eines Bearbeitungswerkzeuges (10) bearbeitbar sind,
• eine Werkzeugaufnahme (15, 30) für ein Bearbeitungswerkzeug (10),
• eine Transfereinrichtung (23) sowie
• eine Werkzeugwechselvorrichtung (33)
aufweist und wobei
• mittels der Transfereinrichtung (23) ein Bearbeitungswerkzeug (10) der Werkzeugaufnahme (15, 30) zugeführt oder von dieser abgeführt wird,
• die Werkzeugwechselvorrichtung (33) aufgrund einer gesteuerten Positionierbewegung in einer Werkzeugwechselposition angeordnet wird und
• nach der Anordnung der Werkzeugwechselvorrichtung (33) in der Werkzeugwechselposition ein Bearbeitungswerkzeug (10) mittels der Werkzeugwechselvorrichtung (33) zwischen der Werkzeugaufnahme (15, 30) und der Transfereinrichtung (23) ausgetauscht wird,
**dadurch gekennzeichnet, dass**
vor einem Werkzeugwechsel durch Positionserfassung die Position der Transfereinrichtung (23) und/oder die Position der Werkzeugaufnahme (15, 30) erfasst wird und dass die Positionierbewegung aufgrund der Positionserfassung gesteuert und dadurch die Werkzeugwechselvorrichtung (33) in der Werkzeugwechselposition angeordnet wird.

10. Verfahren nach Anspruch 9, **dadurch gekennzeichnet, dass** die Position der Transfereinrichtung (23) und /oder die Position der Werkzeugaufnahme (15, 30) vor jedem Werkzeugwechsel durch Positionserfassung erfasst wird.

11. Verfahren nach Anspruch 9 oder 10, **dadurch gekennzeichnet, dass** die Positionierbewegung ausgeführt wird, indem die Transfereinrichtung (23) und/oder die Werkzeugaufnahme (15, 30) bewegt wird und die Werkzeugwechselvorrichtung (33) mit der Transfereinrichtung (23) oder mit der Werkzeugaufnahme (15, 30) bewegungsverbunden ist.

12. Verfahren nach einem der Ansprüche 9 bis 11, **dadurch gekennzeichnet, dass** die Positionierbewegung ausgeführt wird, indem die Werkzeugwechselvorrichtung (33) mit der Transfereinrichtung (23) oder mit der Werkzeugaufnahme (15, 30) bewegungsverbunden ist und dass die Bewegungsverbindung der Werkzeugwechselvorrichtung (33) und der Transfereinrichtung (23) oder die Bewegungsverbindung der Werkzeugwechselvorrichtung (33) und der Werkzeugaufnahme (15, 30) gelöst wird, sobald die Werkzeugwechselvorrichtung (33) in der Werkzeugwechselposition angeordnet ist.

## Claims

1. Mechanical arrangement for processing metal sheets,
• having a machine tool (2) having a processing station (9) in which metal sheets can be processed by means of a processing tool (10),
• having a tool receiving member (15, 30) for a processing tool (10),
• having a transfer device (23) by means of which a processing tool (10) can be supplied to or directed away from the tool receiving member (15, 30) and
• having a tool changing device (33) which can be arranged in a tool changing position on the basis of a controlled positioning movement, a processing tool (10) being able to be changed by means of the tool changing device (33) arranged in the tool changing position between the tool receiving member (15, 30) and the transfer device (23),
**characterised in that**
there is provided a detection device (34, 48) having a detection element which is associated with the tool changing device (33) and by means of which the position of the transfer device (23) and/or the position of the tool receiving member (15, 30) can be detected before a tool change by position detection, and **in that** the positioning movement can be controlled on the basis of the position detection and the tool changing device (33) can thereby be arranged in the tool changing position.

2. Mechanical arrangement according to claim 1, **characterised in that** a machine-side tool receiving member is provided as a tool receiving member (15).

3. Mechanical arrangement according to either of the preceding claims, **characterised in that** the mechanical arrangement has a store (29) for processing tools (10) and **in that** a store-side tool receiving member is provided as the tool receiving member (30).

4. Mechanical arrangement according to any one of the preceding claims, **characterised in that** the tool changing device (33) is connected in terms of movement to the transfer device (23) or the tool receiving member (15, 30) in order to carry out the controlled positioning movement.

5. Mechanical arrangement according to any one of the preceding claims, **characterised in that** the connection of the tool changing device (33) and the transfer device (23) in terms of movement or the connection of the tool changing device (33) and the tool receiving member (15, 30) in terms of movement can be released as soon as the tool changing device (33) is arranged in the tool changing position.

6. Mechanical arrangement according to any one of the preceding claims, **characterised in that** there is provided as the detection element a stop (46) which is arranged in a defined manner relative to the tool changing device (33) and which can be positioned against a counter-stop which is arranged in a defined manner relative to the transfer device (23) and/or against a counter-stop (47) which is arranged in a defined manner relative to the tool receiving member (15, 30), and **in that** the tool changing device (33) is arranged in a defined manner relative to the tool changing position, preferably in the tool changing position, when the stop (46) is positioned against the counter-stop (47).

7. Mechanical arrangement according to any one of the preceding claims, **characterised in that** the detection device (34) is in the form of a switching arrangement for switching a positioning drive of the tool changing device (33), having two switching elements (35, 39) as detection elements, one switching element (39) being associated with the tool changing device (33) and being arranged in a defined manner relative thereto, the other switching element (35) being associated with the transfer device (23) or the tool receiving member (15, 30) and being arranged in a defined manner relative thereto and the positioning drive of the tool changing device (33) being able to be stopped by means of the switching arrangement when the tool changing device (33) is arranged in a defined manner relative to the tool changing position, preferably in the tool changing position.

8. Mechanical arrangement according to any one of the preceding claims, **characterised in that** a plurality of detection devices (34, 48) are provided and are associated with different axial directions in space and **in that** the position of the transfer device (33) and/or the position of the tool receiving member (15, 30) in the different axial directions can be detected by means of the detection devices (34, 48) before a tool change by position detection, and **in that** the positioning movement can be controlled on the basis of the position detection in the different axial directions and the tool changing device (33) can thereby be arranged in the tool changing position.

9. Method for changing tools in a mechanical arrangement (1) for processing metal sheets, wherein the mechanical arrangement (1) has
• a machine tool (2) having a processing station (9) in which metal sheets can be processed by means of a processing tool (10),
• a tool receiving member (15, 30) for a processing tool (10),
• a transfer device (23) and
• a tool changing device (33),
and wherein
• a processing tool (10) is supplied to the tool receiving member (15, 30) or is directed away therefrom by means of the transfer device (23),
• the tool changing device (33) is arranged in a tool changing position on the basis of a controlled positioning movement and,
• after the tool changing device (33) has been arranged in the tool changing position, a processing tool (10) is changed by means of the tool changing device (33) between the tool receiving member (15, 30) and the transfer device (23),
**characterised in that**
the position of the transfer device (23) and/or the position of the tool receiving member (15, 30) is/are detected before a tool change by position detection, and **in that** the positioning movement is controlled on the basis of the position detection and the tool changing device (33) is thereby arranged in the tool changing position.

10. Method according to claim 9, **characterised in that** the position of the transfer device (23) and/or the position of the tool receiving member (15, 30) is/are detected by position detection before each tool change.

11. Method according to claim 9 or claim 10, **characterised in that** the positioning movement is carried out by the transfer device (23) and/or the tool receiving member (15, 30) being moved and the tool changing device (33) being connected to the transfer device (23) or the tool receiving member (15, 30) in terms of movement.

12. Method according to any one of claims 9 to 11, **characterised in that** the positioning movement is carried out by the tool changing device (33) being connected to the transfer device (23) or the tool receiving member (15, 30) in terms of movement, and **in that** the connection of the tool changing device (33) and the transfer device (23) in terms of movement or the connection of the tool changing device (33) and the tool receiving member (15, 30) in terms of movement is released as soon as the tool changing device (33) is arranged in the tool changing position.

## Revendications

1. Agencement mécanique d'usinage de tôles, comprenant
• une machine-outil (2) munie d'un poste d'usinage (9) dans lequel des tôles peuvent être usinées au moyen d'un outil d'usinage (10),
• un logement d'outillage (15, 30) dédié à un outil d'usinage (10),
• un système de transfert (23), au moyen duquel un outil d'usinage (10) peut être délivré audit logement d'outillage (15, 30) et peut être enlevé de ce dernier,
• ainsi qu'un dispositif (33) de remplacement d'outils, pouvant être placé dans une position de remplacement d'outils suite à un mouvement commandé de positionnement, un outil d'usinage (10) pouvant être permuté entre ledit logement d'outillage (15, 30) et ledit système de transfert (23) au moyen dudit dispositif (33) de remplacement d'outils occupant la position de remplacement d'outils,
**caractérisé par le fait**
**qu'**il est prévu un système de détection (34, 38) équipé d'un élément de détection qui est affecté au dispositif (33) de remplacement d'outils, et au moyen duquel l'emplacement du système de transfert (23) et/ou l'emplacement du logement d'outillage (15, 30) peu(ven)t être détecté(s), par détection d'emplacement, préalablement à un remplacement d'outil ; et par le fait que le mouvement de positionnement peut être commandé sur la base de la détection d'emplacement, et ledit dispositif (33) de remplacement d'outils peut ainsi être amené à la position de remplacement d'outils.

2. Agencement mécanique selon la revendication 1, **caractérisé par le fait qu'**un logement d'outillage situé côté machine est prévu en tant que logement d'outillage (15).

3. Agencement mécanique selon l'une des revendications précédentes, **caractérisé par le fait que** ledit agencement mécanique présente un stock (29) dévolu à des outils d'usinage (10) ; et **par le fait qu'**un logement d'outillage situé côté stock est prévu en tant que logement d'outillage (30).

4. Agencement mécanique selon l'une des revendications précédentes, **caractérisé par le fait que** le dispositif (33) de remplacement d'outils est en liaison motrice avec le système de transfert (23) ou avec le logement d'outillage (15, 30), en vue d'accomplir le mouvement commandé de positionnement.

5. Agencement mécanique selon l'une des revendications précédentes, **caractérisé par le fait que** la liaison motrice du dispositif (33) de remplacement d'outils et du système de transfert (23), ou la liaison motrice dudit dispositif (33) de remplacement d'outils et du logement d'outillage (15, 30), peut être supprimée aussitôt que ledit dispositif (33) de remplacement d'outils occupe la position de remplacement d'outils.

6. Agencement mécanique selon l'une des revendications précédentes, **caractérisé par le fait qu'**une butée (46), prévue en tant qu'élément de détection et occupant une position bien définie par rapport au dispositif (33) de remplacement d'outils, peut être mise en applique sur une contre-butée occupant une position bien définie vis-à-vis dudit système de transfert (23) et/ou sur une contre-butée (47) occupant une position bien définie vis-à-vis du logement d'outillage (15, 30) ; et **par le fait que**, lorsque ladite butée (46) est en applique sur ladite contre-butée (47), ledit dispositif (33) de remplacement d'outils occupe une position bien définie par rapport à la position de remplacement d'outils, de préférence, ladite position de remplacement d'outils.

7. Agencement mécanique selon l'une des revendications précédentes, **caractérisé par le fait que** le système de détection (34) est réalisé sous la forme d'un ensemble de commutation conçu pour commuter un entraînement de positionnement du dispositif (33) de remplacement d'outils, et comprenant deux éléments de commutation (35, 39) en tant qu'éléments de détection, sachant que l'un (39) desdits éléments de commutation est affecté audit dispositif (33) de remplacement d'outils et occupe une position bien définie par rapport à celui-ci, l'autre élément de commutation (35) étant affecté au système de transfert (23) ou au logement d'outillage (15, 30), et occupant une position bien définie par rapport à celui-ci, et sachant que ledit entraînement de positionnement du dispositif (33) de remplacement d'outils peut être mis à l'arrêt, au moyen dudit ensemble de commutation, lorsque ledit dispositif (33) de remplacement d'outils occupe une position bien définie par rapport à la position de remplacement d'outils, de préférence, ladite position de remplacement d'outils.

8. Agencement mécanique selon l'une des revendications précédentes, **caractérisé par le fait que** plusieurs systèmes de détection (34, 38) sont prévus et sont assignés à différentes directions axiales dans l'espace ; **par le fait que** l'emplacement du dispositif (33) de remplacement d'outils et/ou l'emplacement du logement d'outillage (15, 30) peu(ven)t être détecté(s) dans les différentes directions axiales au moyen desdits systèmes de détection (34, 38), par détection d'emplacement préalablement à un remplacement d'outil ; et **par le fait que** le mouvement de positionnement peut être commandé sur la base de ladite détection d'emplacement dans les différentes directions axiales, et ledit dispositif (33) de remplacement d'outils peut ainsi être amené à la position de remplacement d'outils.

9. Procédé de remplacement d'outils, mis en oeuvre sur un agencement mécanique (1) d'usinage de tôles, ledit agencement mécanique (1) comprenant
• une machine-outil (2) munie d'un poste d'usinage (9) dans lequel des tôles peuvent être usinées au moyen d'un outil d'usinage (10),
• un logement d'outillage (15, 30) dédié à un outil d'usinage (10),
• un système de transfert (23),
• ainsi qu'un dispositif (33) de remplacement d'outils,
sachant
• qu'au moyen dudit système de transfert (23), un outil d'usinage (10) peut être délivré audit logement d'outillage (15, 30) et peut être enlevé de ce dernier,
• que ledit dispositif (33) de remplacement d'outils peut être placé dans une position de remplacement d'outils suite à un mouvement commandé de positionnement, et
• qu'un outil d'usinage (10) est permuté entre ledit logement d'outillage (15, 30) et ledit système de transfert (23), au moyen dudit dispositif (33) de remplacement d'outils, après que ledit dispositif (33) de remplacement d'outils a été amené à ladite position de remplacement d'outils,
**caractérisé par le fait que**
l'emplacement du système de transfert (23) et/ou l'emplacement du logement d'outillage (15, 30) est (sont) détecté(s), par détection d'emplacement, préalablement à un remplacement d'outil ; et **par le fait que** le mouvement de positionnement est commandé sur la base de la détection d'emplacement, et le dispositif (33) de remplacement d'outils peut ainsi être amené à la position de remplacement d'outils.

10. Procédé selon la revendication 9, **caractérisé par le fait que** l'emplacement du système de transfert (23) et/ou l'emplacement du logement d'outillage (15, 30) est (sont) détecté(s), par détection d'emplacement, préalablement à chaque remplacement d'outil.

11. Procédé selon la revendication 9 ou 10, **caractérisé par le fait que** le mouvement de positionnement est exécuté par mouvement imprimé au système de transfert (23) et/ou au logement d'outillage (15, 30), et par liaison motrice du dispositif (33) de remplacement d'outils instaurée avec ledit système de transfert (23) ou avec ledit logement d'outillage (15, 30).

12. Procédé selon l'une des revendications 9 à 11, **caractérisé par le fait que** le mouvement de positionnement est exécuté par liaison motrice du dispositif (33) de remplacement d'outils instaurée avec le système de transfert (23) ou avec le logement d'outillage (15, 30) ; et **par le fait que** la liaison motrice du dispositif (33) de remplacement d'outils et du système de transfert (23), ou la liaison motrice dudit dispositif (33) de remplacement d'outils et du logement d'outillage (15, 30), est supprimée aussitôt que ledit dispositif (33) de remplacement d'outils occupe la position de remplacement d'outils.
